# EUROPEAN PATENT APPLICATION

(11) **EP 4 625 004 A2**
(43) Date of publication of application: **01.10.2025**
(21) Application number: 25196449.0
(22) Date of filing: 09.04.2021
(51) Int. Cl.: G02B 1/18

(54) **OPTICAL ARTICLE WITH ANTIBACTERIAL FUNCTION**

(30) Priority: 09.04.2020 EP 20315146
(62) Divisional of application: 21717861.5
(71) Applicant: Essilor International, 94220 Charenton-Le-Pont (FR)
(72) Inventor: MAURY, Hélène, 94220 CHARENTON LE PONT (FR); FEUILLADE, Mathieu, 94220 CHARENTON LE PONT (FR)
(74) Representative: Plasseraud IP

(57) **Abstract**

The invention relates to an optical article, such as an ophthalmic lens, comprising a transparent substrate with a front main face and a rear main face, at least one of its main faces being coated with a multilayer interference coating, such as a mirror coating or an antireflective coating, which is the top coating of the article, wherein the outermost layer of the top coating comprises a material having antibacterial properties, or wherein the outermost layer of the top coating is a porous layer and the layer directly underneath the outermost layer of the top coating is a layer comprising a material having antibacterial properties.

## Description

When worn, spectacles are in contact with the nose and the ears. Moreover, spectacles are in regular contact with the hands, when they are put on or taken off or when they are adjusted. As a result, spectacles are generally contaminated with bacteria including significant amounts of potentially pathogenic ones. This may contribute to eye infections or constitute possible routes to pass pathogens to patients in hospital environments.

Organic antibacterial varnishes for lenses are known in the art. In US2007/0195260, an acrylic varnish base is combined with an active organic compound such as triclosan.

However, such varnishes tend to adversely affect the durability of the optical article. For example, the adhesion properties of the organic varnish on an inorganic layer such as those composing standard antireflective coatings can be poor. Moreover it is not possible to use vacuum coating methods with such varnishes, which would be desirable considering the reliability of vacuum coating methods in providing smooth and uniform coatings.

CN105404022, CN105467619, CN105467620, CN105629508 all disclose nanosilver layers for providing antibacterial properties to lenses. In these publications, the nanosilver layer is deposited by vacuum deposition techniques and included in various stacks of inorganic coatings. However in these stacks, a high hardness layer of between 10 nm and 50 nm is systematically deposited between the antibacterial layer and the exterior of the lens. The high hardness layer according to these publications consists in Al₂O₃, ZrO₂, SiO₂ or SiO. The presence of this high hardness layer between the antibacterial layer and the exterior of the lens reduces the antibacterial activity of the lens.

CN104073030 discloses layers of mixtures of CaO and ZnO for providing antibacterial properties to lenses. Such layers can be deposited by vacuum evaporation. The antibacterial layer according to this publication is sandwiched between a base layer and a protective layer. This set of three layers is itself deposited on top of a stack of layers of alternating high and low indices. The presence of protective layer between the antibacterial layer and the exterior of the lens reduces the antibacterial activity of the lens.

The present invention provides optical articles combining enhanced antibacterial properties and excellent optical properties, for example excellent antireflective properties, through the use of multilayer coatings with good durability and reliably smooth and homogeneous layers. Technical solutions are disclosed that allow the use of layers comprising materials having antibacterial properties at specific locations in the optical article, where they are able to provide strong antibacterial properties and where, at the same time, they are able to contribute to giving the desired optical properties to the optical article.

The optical article according to the invention comprises a transparent substrate having front and rear main faces, at least one of said main faces and preferably both main faces being coated with a multilayer interference coating.

An optical component is considered to be transparent when the observation of an image through this component is perceived without significant loss of contrast. Stated otherwise, the interposition of a transparent optical component between an image and an observer of the latter does not significantly reduce the quality of the image.

The "rear face" of the substrate (the rear face is generally concave) is understood to be the face that, when the article is being used, is closest to the eye of the user. Conversely, the "front face" of the substrate (the front face is generally convex) is understood to be the face that, when the article is being used, is furthest from the eye of the user. The optical article can also be a plano lens.

The optical article according to the present invention is a transparent optical article, preferably an optical lens or lens blank, and more preferably an ophthalmic lens or lens blank.

The term "ophthalmic lens" is used to mean a lens adapted to a spectacle frame to protect the eye (as in sunglasses) and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, glazing units etc.

Any substrate known in the ophthalmic industry is suitable for the invention, especially organic lens substrates, for example a thermoplastic or thermosetting plastic material.

Thermoplastic may be selected from, for instance: polyamides; polyimide; polysulfones; polycarbonates and copolymers thereof; poly(ethylene terephtalate) and polymethylmethacrylate (PMMA).

Thermoset materials may be selected from, for instance: cycloolefin copolymers such as ethylene/nor bornene or ethylene/cyclopentadiene copolymers; homo and copolymers of allyl carbonates of linear or branched aliphatic or aromatic polyols, such as homopolymers of diethylene glycol bis(allyl carbonate) (CR 39^{®}); homo- and copolymers of (meth)acrylic acid and esters thereof, which may be derived from bisphenol A; polymer and copolymer of thio(meth)acrylic acid and esters thereof, polymer and copolymer of allyl esters which may be derived from Bisphenol A or phthalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (meth)acrylate is intended to mean an acrylate or a methacrylate. As used herein, a polycarbonate (PC) is intended to mean either homopolycarbonates or copolycarbonates and block copolycarbonates.

The multilayer top coating modifying the reflective properties of the article of the invention or the multilayer interference coating of the invention may be deposited directly onto a bare substrate.

In the following, the expressions "The multilayer top coating modifying the reflective properties of the article of the invention", "the multilayer interference coating of the invention", "the interference coating of the invention", "multilayer top coating of the invention" or "top coating of the invention" can be used indifferently, these expressions are interchangeable.

In some applications, it is preferred for the front and/or rear main face of the substrate to be coated with one or more functional coatings prior to depositing the multilayer interference coating. The multilayer interference coating is thus the outermost coating on the faces on which it is deposited. In other words the multilayer interference coating is the top coating on the faces on which it is deposited.

These functional coatings traditionally used in optics may be, without limitation, an impact-resistant primer layer, an abrasion-resistant coating and/or a scratch-resistant coating, a polarizing coating, a photochromic coating or a tinted coating.

As defined herein, a coating that is "on" one surface of an optical article is defined as a coating that (a) is positioned over that surface, (b) need not be in contact with that surface, i.e. one or more intervening coatings may be disposed between that surface and the coating in question, and (c) need not cover that surface completely.

As defined herein, a coating can comprise one or several layers. A coating is defined by its function, a layer is defined by its composition. The deposition of the material constituting a layer generally happens in one step (one step of vacuum deposition or one step of dip coating, for example) although it can take several steps of processing to finally form said layer (for example, a step of curing of the layer can follow the step of dip-coating).

Generally, the front and/or rear main face of the substrate onto which a multilayer interference coating will be deposited is coated with an impact-resistant primer layer, with an anti-abrasion and/or anti-scratch coating, or with an impact resistant primer layer coated with an anti-abrasion and/or anti-scratch coating.

Prior to depositing the abrasion-resistant coating and/or the scratch-resistant coating, it is possible to apply onto the substrate a primer coating to improve the impact resistance and/or the adhesion of the subsequent layers in the final product. This coating may be any impact-resistant primer layer traditionally used for articles in a transparent polymer material, such as ophthalmic lenses.

In the following, "substrate" is intended to mean a coated or uncoated (or bare) substrate.

The substrate may also be pre-treated with a physical or chemical surface activating treatment, so as to reinforce the adhesion of the multilayer interference coating on the substrate. Such pre-treatment is generally conducted under vacuum. It may be a bombardment with energetic and/or reactive species, for example with an ion beam ("Ion Pre Cleaning" or "IPC" ) or with an electron beam, a corona discharge treatment, an ion spallation treatment, an ultra violet treatment or a plasma-mediated treatment under vacuum, generally using an oxygen or an argon plasma. It may also be an acid or basic treatment and/or a solvent based treatment (water, hydrogen peroxide or any organic solvent).

A multilayer interference coating, or stack, usually consists of a multilayer stack comprising interferential thin layers, generally an alternation of layers based on a dielectric material of high refractive index (HI) and a dielectric material of low refractive index (LI). The interference coating of the present invention may be, non-limitingly, an antireflective coating, a reflective (mirror) coating, an infrared filter or an ultraviolet filter, and is preferably an antireflective coating.

Optical characteristics of optical articles are measured with colorimetric coefficients and reflection factors. The "mean light reflection factor", noted Rv, is such as defined in the ISO 13666:1998 Standard, and measured in accordance with the ISO 8980-4, i.e. this is the weighted spectral reflection average over the whole visible spectrum between 380 and 780 nm. Rv is usually measured for an angle of incidence lower than 17°, typically of 15°, but can be evaluated for any angle of incidence.

The "angle of incidence" is the angle formed by a ray of light incident on an ophthalmic lens surface and a normal to the surface at the point of incidence. The ray of light is for instance an illuminant light source, such as the standard illuminant D65 as defined in the international colorimetric CIE L*a*b*. Generally the angle of incidence changes from 0° (normal incidence) to 90° (grazing incidence).

The color coordinates of the articles of the invention in the CIE L*a*b* color space are calculated between 380 and 780 nm with respect to illuminant D65 and the observer (angle of incidence: 15°). The interference coatings produced are not limited with regard to their hue angle. However, their hue angle h preferably ranges from 120 to 150°, thereby producing a coating having a residual green color in reflection, and their chroma C* is preferably lower than 15 and more preferably lower than 10.

The optical article according to the invention does not absorb too much in the visible although non-negligible absorption is tolerated in particular where the optical article of the invention is an ophthalmic lens designed for eye protection as in sunglasses. This means, in the context of the present application, that the transmission factor in the visible range Tv, also called relative transmission factor in the visible range, is higher than 43%, preferably higher than 65%, more preferably higher than 85%, even more preferably higher than 90 % when the multilayered interference coating of the invention is coated on at least one of the main faces of the substrate, preferably when it is coated on both sides of the substrate faces.

The factor Tv should be understood as defined by the international normalized definition (ISO 13666:1998 Standard). It is defined in the wavelength range of from 380 to 780 nm.

When deposited on a transparent substrate, the function of an antireflection coating is to reduce its light reflection and therefore to increase its light transmission. The mean light reflection factor Rv on a main face of optical articles of the invention where the multilayer interference coating is an antireflective coating is preferably lower than 2.5%, for an angle of incidence comprised in the range 0°-20°, for example for an angle of incidence of 15°.

In some embodiments, the multilayer interference coating of the invention is a mirror coating.

As defined herein a mirror coating is such that the Rv of the optical article coated with the mirror coating is higher than the Rv of the bare substrate. The Rv of the bare substrates most commonly used for ophthalmic lenses is generally in the range of 5% to 10%.

Mirror coatings are desirable in particular for visual comfort and for esthetical reasons. For example in lenses for sunglasses, a mirror coating helps reducing the intensity of the transmitted light and can be designed with specific hues to give certain colors to the optical article.

A multilayer interference coating, depending on its structure (nature of the material constituting the layers, number and thickness of layers) and on the refractive index of the substrate, will present specific colorimetric and reflection characteristics. Obtaining a balance of all properties is the art of antireflective coating design.

In the present invention, a layer of the multilayer interference coating is said to be a layer with a high refractive index (HI) when its refractive index is higher than or equal to 1.55, preferably higher than or equal to 1.6, even more preferably higher than or equal to 1.7, even more preferably higher than or equal to 1.8 and most preferably higher than or equal to 1.9.

In the present invention, a layer of a multilayer interference coating is said to be a low refractive index layer (LI) when its refractive index is lower than 1.55, preferably lower than or equal to 1.50, more preferably lower than or equal to 1.48. Said LI layer preferably has a refractive index higher than 1.1.

Unless otherwise specified, the refractive indexes referred to in the present application are expressed at 25°C. at a wavelength of 510 nm.

In the optical articles of the invention, either the outermost layer of the multilayer interference coating or top coating of the invention comprises a material having antibacterial properties, or the outermost layer of the top coating is a porous layer and the layer directly underneath the outermost layer of the top coating is a layer comprising a material having antibacterial properties.

In some embodiments of the present invention, the outermost layer of the top coating of the invention is a layer with a high refractive index, for example its refractive index is of at least 1.55, for example of at least 1.6, for example of at least 1.7, for example of at least 1.8, for example of at least 1.9, wherein the refractive index is expressed at 25°C and at a wavelength of 510 nm.

As defined herein, a porous layer is a layer comprising a percolating network of pores. Such layers can be porous organosilicate glasses (pSiCOH) obtained, for instance, through sol gel processes or plasma enhanced chemical vapor deposition as in Grill et al. (Applied Physics Reviews 1, 011306 (2014)).

For optical articles of the invention where the outermost layer of the top coating is a porous layer and the layer directly underneath the outermost layer of the top coating is a layer comprising a material having antibacterial properties, the outermost layer of the top coating is preferably a mesoporous layer.

As defined herein, a mesoporous layer is a porous layer where the average pore diameter is of at least 2 nm. Mesoporous layers suitable for multilayer interference coatings can be produced as described in Essilor patents US2008/0079894A1 and US2009/0169859A1.

For optical articles of the invention where the outermost layer of the top coating is a porous layer and the layer directly underneath the outermost layer of the top coating is a layer comprising a material having antibacterial properties, the porous layer preferably comprises SiO2 or ZrO2.

The antibacterial efficiency of the optical article of the invention is thus maximized. Indeed the bacteria contaminate the outermost layer of the optical article. The bacteria would then either be in direct contact with an antibacterial material or would only be separated from said antibacterial material by a porous layer that still allows the antibacterial material to have an effect.

It is indeed believed that the antibacterial activity of the antibacterial material is linked to the diffusion of ions from the surface of said antibacterial material. Said diffusion of ions is possible through the porous layer.

In some embodiments of the invention, the layer comprising a material having antibacterial properties consists in the material having antibacterial properties.

In some embodiments of the invention, the layer comprising a material having antibacterial properties consists in a composite material comprising at least 1vol% of the material having antibacterial properties and at most 99vol% of a matrix material.

As defined herein, a composite material is a material comprising a material having antibacterial properties and a matrix material. In the composite material, the antibacterial material and the matrix material should not mix in a way that prevents the antibacterial material to keep its antibacterial properties. Preferably, the antibacterial material and the matrix material do not form a defined compound or a solid solution. For example, composite materials can be obtained by vacuum coevaporation processes of two different ingredients as in e.g. US2017/0299887.

The matrix material is chosen to confer the desired optical properties (e.g. refractive index, absorptive properties, color) to the composite material.

The use of a composite material for the layer comprising a material having antibacterial properties allows the use of antibacterial materials that would have improper optical properties on their own. The mixture with the matrix material mitigates these improper optical properties of the antibacterial material since the optical properties of the composite material result from an average of the properties of the matrix material and of the properties of the material having antibacterial properties.

The matrix material is preferably chosen from SiO2, MgF2, ZrO2 and hybrid materials obtained from vacuum deposition of precursor compounds comprising one or more silicon atoms, wherein said silicon atoms are only bonded to at least one alkyl groups and to groups containing a -O-Si chain or a -NH-Si chain so as to form Si-O-Si groups or Si-NH-Si groups.

These hybrid materials and their obtention are described in US 2014/0354945, which is incorporated herein by reference.

Since ZrO2 is a HI material, ZrO2 can be used as matrix material where a HI is desired for the composite material.

SiO2, MgF2 and hybrid materials are LI materials, they can be used as matrix materials e.g. for lowering the refractive index of a material having antibacterial properties that would otherwise be of HI.

Depending on the refractive index and the other properties desired for the composite material, the proportion of the matrix material and of the material having antibacterial properties can be varied.

In some embodiments, the composite material comprises between 1vol% and 10vol% of a material having antibacterial properties and between 99vol% and 90vol% of a matrix material, preferably the composite material comprises between 1vol% and 5vol% of a material having antibacterial properties and between 99vol% and 95vol% of a matrix material.

In some embodiments, the composite material comprises at least 50vol% of the material having antibacterial properties and at most 50vol% of a matrix material. This will be for example the case where the layer comprising the material having antibacterial properties is directly underneath the porous layer.

In some embodiments, the composite material has a refractive index of at most 2.2, preferably at most 1.8, more preferably of at most 1.6.

In some embodiments, the composite material has a refractive index of at least 1.6, preferably of at least 1.8. This will be for example the case where the layer comprising the material having antibacterial properties is directly underneath the porous layer.

According to the invention, a material is said to have antibacterial properties if the anti-microbial activity R of said material is greater than 2 for at least E. Coli and S. Aureus. The anti-microbial activity is evaluated by application of the Japanese International Standard (JIS) Z 2801 as follows:
The test microorganism is prepared, usually by growth in a liquid culture medium.

The suspension of test microorganism is standardized by dilution in a nutritive broth (this affords microorganisms the potential to grow during the test).

Control and test surfaces are inoculated with microorganisms, in triplicate, and then the microbial inoculum is covered with a thin, sterile film. Covering the inoculum spreads it, prevents it from evaporating, and ensures close contact with the antimicrobial surface.

Microbial concentrations are determined at "time zero" by elution followed by dilution and plating.

A control is run to verify that the neutralization/elution method effectively neutralizes the antimicrobial agent in the antimicrobial surface being tested.

Inoculated, covered control and antimicrobial test surfaces are allowed to incubate undisturbed in a humid environment for 24 hours.

After incubation, microbial concentrations are determined. The reduction of microorganisms relative to initial concentrations and the control surface is calculated.

The anti-microbial activity R is defined as: R = log(B/C), B being the average value of the number of active bacteria after 24h of exposition to the control and C being the average value of the number of active bacteria after 24h of exposition to the material being tested.

The materials having antibacterial properties preferably used in the present invention can be deposited as a layer on a substrate by physical vapor deposition under vacuum. In this way, optical articles of the invention can be produced by taking advantage of the reliability of vacuum coating methods in providing smooth and uniform coatings.

Physical vapor deposition under vacuum preferably is performed according to any of the following methods:
i) by, optionally ion-beam assisted, evaporation;
ii) by ion-beam sputtering;
iii) by cathode sputtering;
iv) by plasma-assisted chemical vapor deposition.

These various methods are described in the following references "Thin Film Processes" and "Thin Film Processes II", Vossen & Kern, Ed., Academic Press, 1978 and 1991, respectively. A particularly recommended method is the evaporation under vacuum. Preferably, the deposition of each of the layers of the antireflective coating is conducted by evaporation under vacuum.

Preferably, the materials having antibacterial properties to be used in the invention adhere well on the inorganic layers generally used in multilayer interference coatings.

In some embodiments, the material having antibacterial properties to be used in the invention is a material with a high refractive index, for example its refractive index is of at least 1.55, for example of at least 1.6, for example of at least 1.7, for example of at least 1.8, for example of at least 1.9, wherein the refractive index is expressed at 25°C and at a wavelength of 510 nm.

The materials having antibacterial properties to be used in the optical articles of the invention are preferably chosen from Al, Ca, Co, Ni, Cu, Zn, Mo, Pd, Ag, W, their oxides and mixtures thereof.

For example, the material having antibacterial properties is chosen from oxides of aluminum, such as Al2O3, oxides of copper, such as CuO or Cu2O, oxydes of zinc, such as ZnO, oxides of silver, such as AgO or Ag2O and mixtures of oxides of zinc and oxides of calcium.

For example, the material having antibacterial properties is a mixture of ZnO and CaO and the molar ratio ZnO/CaO is comprised between 2 and 0.5, preferably wherein the molar ratio ZnO/CaO is comprised between 1.2 and 0.8, more preferably wherein the molar ratio ZnO/CaO is 1.

As defined herein, an oxide is a chemical compound whose chemical formula contains at least one oxygen atom and one other element.

In JIS Z 2801, the anti-microbial activity R is measured 24h after inoculation, the kinetics of the bactericidal activity is therefore not taken into account. Kawakami et al. (ISIJ International, Vol. 48 (2008), No. 9, pp. 1299-1304) have shown however that among the metals cited in the list above, Cu and Ag are the quickest to act in terms of antibacterial activity.

According to the invention, where the multilayer interference coating is an antireflective coating, silver or copper layers are preferentially used as the layer comprising the material having antibacterial properties in those embodiments where a porous layer is the top layer of the top coating. In these embodiments, silver or copper layers are positioned directly underneath the porous layer. In these embodiments, silver or copper layers used as the layer comprising the material having antibacterial properties preferentially have a thickness comprised between 6 nm and 20 nm, more preferably said metal layer has a thickness comprised between 7 nm and 15 nm.

The most common design of antireflective coatings involves an alternation of HI layers and LI layers, wherein the outermost layer is a LI layer. However most materials having antibacterial properties, in particular those that are not metals, are HI materials. Metals on the other hand tend to have an important extinction coefficient, meaning that they absorb in the visible and therefore limit the transmission of light through the optical article.

Most materials having antibacterial properties, which can be deposited as a layer on a substrate by physical vapor deposition under vacuum are thus unsuitable for use as the outermost layer of the antireflective coating in conventional antireflective coatings. It makes it difficult to design antireflective coatings with both good antibacterial properties and good optical properties.

The present invention provides various solutions to the problem of designing an antireflective coating with good antibacterial properties and good optical properties. Two solutions have already been disclosed herein, namely the use of composite materials for the layer comprising the material having antibacterial properties and the use of a porous layer as the outermost layer of the top coating with the layer comprising the material having antibacterial properties placed directly underneath said porous layer.

Indeed, when the layer comprising the material having antibacterial properties consists in a composite material, said composite material can have a low index of refraction and at the same time comprise a metal having antibacterial properties or a material of high refractive index having antibacterial properties.

In the case of porous layers, the solution is provided by the simple fact that the layer comprising the material having antibacterial properties is no longer the outermost layer of the antireflective coating. The porous layer can very easily be designed to be a LI layer. The presence of the pores lowers the index of the porous layer compared to the index of the material constituting the porous network. Moreover it is possible to use a low index material, for example SiO2, for the material constituting the porous network. In this way, the invention provides alternating HI and LI layers (the HI layer is the layer comprising the material having antibacterial properties) with a LI layer as the outermost layer in the antireflective coating.

Thus in one embodiment of the invention there is provided an optical article wherein the multilayer interference coating is an antireflective coating and wherein the outermost layer of the top coating is a porous layer which is a LI layer and the layer comprising a material having antibacterial properties is placed directly underneath the outermost layer of the top coating and is a HI layer, for example it has a refractive index of at least 1.6.

A third solution to the technical problem above is provided by an embodiment of the optical article of the invention, wherein the multilayer interference coating is an antireflective coating and the outermost layer of the top coating comprises a material having antibacterial properties that does not consist in metal, for example the outermost layer of the top coating can consist in a metal oxide or in a mixture of metal oxides or in HI composite material, for example a HI composite material comprising at least 50vol% of the material having antibacterial properties and at most 50vol% of a matrix material.

Preferably, in this embodiment, the optical article of the invention further comprises a metal layer placed directly underneath the outermost layer of the top coating. Preferably, said metal layer consists in Cu, Ag, Au or mixtures thereof. Preferably, said metal layer has a thickness comprised between 6 nm and 20 nm, more preferably said metal layer has a thickness comprised between 7 nm and 15 nm.

The applicant has found that when metal layer are placed directly underneath the outermost layer of the top coating it becomes possible to obtain good antireflective properties even when said outermost layer has a high refractive index. Metal layers however should neither be too thin nor too thick. Under a certain thickness, for example 6 nm or 7 nm, it becomes difficult to deposit a continuous layer of metal. When metal layers are discontinuous, plasmon resonance modifies their optical properties and makes it more difficult to predict the properties of the coating containing said discontinuous metal layers. Over a certain thickness, the absorptive properties of the metal are detrimental to the transmission factor of the optical article.

### Examples

The optical properties of the materials used in the examples are presented in table 1.

**Table 1**

| Material | n@510 nm (refractive index) | k@510 nm (extinction coefficient) |
|---|---|---|
| SiO₂ | 1,47 | 0,00 |
| ZnO/CaO (1:1) | 1,98 | 0,00 |
| ZrO2 | 2,00 | 0,00 |
| Ag | 0,14 | 2,76 |
| Au | 0,75 | 1,85 |
| Cu | 1,12 | 2,60 |
| Al2O3 | 1,66 | 0,00 |
| CuO | 2,55 | 0,66 |
| SiO2 (99%)-Cu (1%) | 1,49 | 0,02 |
| SiO2 (95%)-Cu (5%) | 1,57 | 0,13 |

In all following examples, Rv (defined above in the description) is evaluated for an angle of incidence of 15° and for one face of the optical article.

Calculations are performed with standard software, such as MacLeod version 10.

Table 2 presents examples of optical articles of the invention wherein the multilayer interference coating is an antireflective coating and wherein the top layer of the antireflective coating consists in a material having antibacterial properties.

Table 3 presents examples of optical articles of the invention wherein the multilayer interference coating is an antireflective coating and wherein the top layer of the antireflective coating consists in a composite material comprising a material having antibacterial properties.

Table 4 presents examples of optical articles of the invention wherein the multilayer interference coating is a mirror coating and wherein the top layer of the antireflective coating consists in a material having antibacterial properties.

For the examples in table 4, the substrate is made of CR 39^{®} (ORMA^{®} ophthalmic lenses, sold by the applicant) and are coated with a polyurethane latex primer coating and a polysiloxane based hard coating as in EP0614957, example 3 (Mithril^{®} hardcoat by Essilor International). Such an association substrate - hard coat has a Rv of 4% for one face.

**Table 2**

| | | Example 1 | Example 2 |
|---|---|---|---|
| | Substrate and hardcoat refractive index | 1.5 | 1.6 |
| Antireflective coating | Layer 1 | ZrO2 - 77nm | ZrO2 - 20nm |
| | Layer 2 | Cu - 9nm | SiO2 - 36nm |
| | Layer 3 | ZnO/CaO (1:1) - 51nm | ZrO2 - 82nm |
| | Layer 4 | -- | Au - 10nm |
| | Layer 5 | -- | ZnO/CaO (1:1) - 40nm |
| Properties of the article | Rv | 0.7% | 1.1% |
| | Tv | 85% | 90% |
| | C* | 60 | 9 |
| | h | 309° | 30° |

**Table 3**

| | | Example 3 | Example 4 |
|---|---|---|---|
| | Substrate and hardcoat refractive index | 1.5 | 1.5 |
| Antireflective coating | Layer 1 | ZrO2 - 28nm | ZrO2 - 69nm |
| | Layer 2 | SiO2 - 29nm | SiO2(99%)-Cu(1%) - 95nm |
| | Layer 3 | ZrO2 - 58nm | -- |
| | Layer 4 | SiO2(99%)-Cu(1%) - 90nm | -- |
| Properties of the article | Rv | 0.8% | 0.9% |
| | Tv | 95% | 69% |
| | C* | 10 | 30 |
| | h | 135° | 310° |

**Table 4**

| | | Example 5 | Example 6 |
|---|---|---|---|
| | Substrate and hardcoat refractive index | 1.5 | 1.5 |
| Mirror coating | Layer 1 | SiO2 - 69nm | SiO2 - 95nm |
| | Layer 2 | ZrO2 - 65nm | ZrO2 - 178nm |
| | Layer 3 | SiO2 - 101nm | SiO2 - 126nm |
| | Layer 4 | ZrO2 - 65nm | CuO - 6nm |
| | Layer 5 | Al2O3 - 18nm | - |
| Properties of the article | Rv | 22% | 7% |
| | Tv | 77% | 78% |
| | C* | 5 | 37 |
| | h | 187° | 260° |

## Claims

1. An optical article comprising a transparent substrate with a front main face and a rear main face, at least one of its main faces being coated with a multilayer interference coating which is the top coating of the article,
wherein the outermost layer of the top coating comprises a material having antibacterial properties, or
wherein the outermost layer of the top coating is a porous layer and the layer directly underneath the outermost layer of the top coating is a layer comprising a material having antibacterial properties.

2. The optical article according to claim 1, wherein the layer comprising a material having antibacterial properties consists in the material having antibacterial properties.

3. The optical article according to claim 1, wherein the layer comprising a material having antibacterial properties consists in a composite material comprising at least 1vol% of the material having antibacterial properties and at most 99vol% of a matrix material, preferably wherein the matrix material is chosen from SiO2, MgF2, ZrO2 and hybrid layers obtained from vacuum deposition of precursor compounds comprising one or more silicon atoms, wherein said silicon atoms are only bonded to at least one alkyl groups and to groups containing a -O-Si chain or a -NH-Si chain so as to form Si-O-Si groups or Si-NH-Si groups.

4. The optical article according to claim 3, wherein the composite material comprises between 1vol% and 10vol% of the material having antibacterial properties and between 99vol% and 90vol% of the matrix material, preferably the composite material comprises between 1vol% and 5vol% of the material having antibacterial properties and between 99vol% and 95vol% of the matrix material.

5. The optical article according to claim 3, wherein the composite material comprises at least 50vol% of the material having antibacterial properties and at most 50vol% of the matrix material.

6. The optical article according to any one of the preceding claims wherein the outermost layer of the top coating has a refractive index of at least 1.55, for example of at least 1.6, for example of at least 1.7, for example of at least 1.8, for example of at least 1.9, wherein the refractive index is expressed at 25°C and at a wavelength of 510 nm.

7. The optical article according to any one of the preceding claims wherein the material having antibacterial properties has a refractive index of at least 1.55, for example of at least 1.6, for example of at least 1.7, for example of at least 1.8, for example of at least 1.9, wherein the refractive index is expressed at 25°C and at a wavelength of 510 nm.

8. The optical article according to any of the preceding claims, wherein the material having antibacterial properties is chosen from Al, Ca, Co, Ni, Cu, Zn, Mo, Pd, Ag, W, their oxides and mixtures thereof, preferably wherein the material having antibacterial properties is chosen from oxides of aluminum, oxides of copper, oxides of zinc, oxides of silver and mixtures of oxides of zinc and oxides of calcium, more preferably wherein the material having antibacterial properties is a mixture of ZnO and CaO and the molar ratio ZnO/CaO is comprised between 2 and 0.5, even more preferably preferably wherein the molar ratio ZnO/CaO is comprised between 1.2 and 0.8, more preferably wherein the molar ratio ZnO/CaO is 1.

9. The optical article according to any of the preceding claims, wherein the porous layer is mesoporous.

10. The optical article according to any of the preceding claims, wherein the porous layer comprises SiO2 or ZrO2.

11. The optical article according to any of the preceding claims wherein the top coating is an antireflective coating.

12. The optical article according to claim 11, wherein the outermost layer of the top coating comprises the material having antibacterial properties and does not consist in metal.

13. The optical article according to claim 12, further comprising a metal layer placed directly underneath the outermost layer of the top coating, preferably wherein the metal layer consists in Cu, Ag, Au or mixtures thereof, more preferably wherein the metal layer has a thickness comprised between 6 nm and 20 nm, even more preferably wherein the metal layer has a thickness comprised between 7 nm and 15 nm.

14. The optical article according to claim 11, wherein the outermost layer of the top coating is a porous layer and the layer comprising a material having antibacterial properties placed directly underneath the outermost layer of the top coating has a refractive index of at least 1.6.

15. The optical article according to anyone of claims 1 to 10, wherein the top coating is a mirror coating.
